# EUROPÄISCHE PATENTSCHRIFT

(11) **EP 0 563 520 B1**
(45) Veröffentlichungstag und Bekanntmachung des Hinweises auf die Patenterteilung: **26.03.1997**
(21) Anmeldenummer: 93101051.6
(22) Anmeldetag: 25.01.1993
(51) Int. Cl.: F02C 7/18

(54) **Gasturbinenanlage**
Gas turbine plant
Installation de turbine à gaz

(30) Priorität: 31.03.1992 DE 4210544
(43) Veröffentlichungstag der Anmeldung: 06.10.1993
(73) Patentinhaber: ASEA BROWN BOVERI AG, 5401 Baden (CH)
(72) Erfinder: Althaus, Rolf, Dr., CH-9230 Flawil (CH)
(74) Vertreter: Klein, Ernest

(56) Entgegenhaltungen:
- DD-A- 103 486
- DD-A- 113 070
- DE-C- 846 038

## Beschreibung

Die vorliegende Erfindung betrifft eine Gasturbinenanlage gemäss Oberbegriff des Anspruchs 1.

Es ist üblich, die für die durch Druckluft zu kühlenden Teile eine Gasturbinenanlage, insbesondere hinsichtlich der für die Turbine und die Brennkammer benötigten Kühlluft, dem ohnehin vorhandenen Kompressor der Anlage zu entnehmen. Da bei modernen Gasturbinenanlagen sehr wenig Luft aus dem Kompressor zu Kühlzwecken abgezweigt werden kann, hat eine solche Kühlung sehr schnell seine Grenze erreicht.

Aus DD-A-113 070 ist eine Gasturbinenanlage bekanntgeworden, zu deren Betrieb Erdgas eigesetzt wird. Dieses Erdgas wird über eine Druckleitung herangeführt. Die kalorisch belasteten Teile dieser Gasturbinenanlage werden über einen Kühlluftkreis mit Druckluft gekühlt. Im Kühlluftkreis selbst wirkt ein Kompressor eines Boosters, dessen in der Druckluftleitung liegende Turbine mit dem genannten Erdgas angetrieben wird. Da die zu Kühlzwecken einzusetzende Druckluft durch die Kompression im zum Booster gehörigen Kompressor eine Temperaturerhöhung erfährt, eignet sie sich nur bedingt, die Kühlung der Heissteile der Gasturbinenanlage zu bewerkstelligen. Kommt hinzu, dass diese Kompression druckmässig auf tiefem Niveau gehalten werden muss, da sonst die Temperatur der Kühlluft zwangsläufig noch höher ausfällt, was ihrer Bestimmung entgegengesetzt verläuft. Demnach lässt sich objektiv feststellen, dass die Kühlkapazität dieser Kühlluft aus dem Vorschlag der Entgegenhaltung relativ beschränkt ausfällt.

Hier will die Erfindung Abhilfe schaffen.

Die Aufgabe, welche mit der vorliegenden Erfindung gelöst werden soll, besteht in der Schaffung einer Vorrichtung zum Kühlen einzelner Teile der Gasturbinenanlage, welche den Gesamtwirkungsgrad der Anlage möglichst wenig beeinträchtigt und eine ausreichende Kühlung dieser Teile gewährleistet.

Diese Aufgabe wird erfindungsgemäss dadurch gelöst, dass die Gasturbinenanlage ausser den Merkmalen im Oberbegriff auch die Merkmale des Kennzeichens des Anspruchs 1 enthält.

Der Vorteil dieser Anlage besteht in der Auswertung von bisher nicht genutzter Energie des Erdgases, insbesondere wird die Strömungsenergie des Erdgases und seine allenfalls niedrige Temperatur genutzt. Es werden somit neue Energiequellen zur Erzeugung der Kühlluft genutzt.

Die Verwendung von Mitteln zur Erzeugung von Kühlluft höherer Qualität hat folgende Vorteile (wobei unter Kühlluft höherer Qualität Kühlluft zu verstehen ist, die unter einem höheren Druck p steht und eine niedrigere Temperatur T aufweist, als die bisher üblicherweise verwendete Kühlluft):
a) Durch die Verwendung von Kühlluft höherer Qualität kann Kühlluft eingespart werden. Die eingesparte Kühlluft kann an der Verbrennung teilnehmen, wodurch die mittlere Flammentemperatur gesenkt wird, was sich positiv auf die NOx-Bildung auswirkt. Die Kühlluft wird vor allem zur Kühlung der Brennkammer und der Turbine benötigt.
b) Durch die Herabsetzung des Kühlluftanteils kann der Wirkungsgrad der einzelnen Komponenten - Brennkammer und Turbine - signifikant verbessert werden.

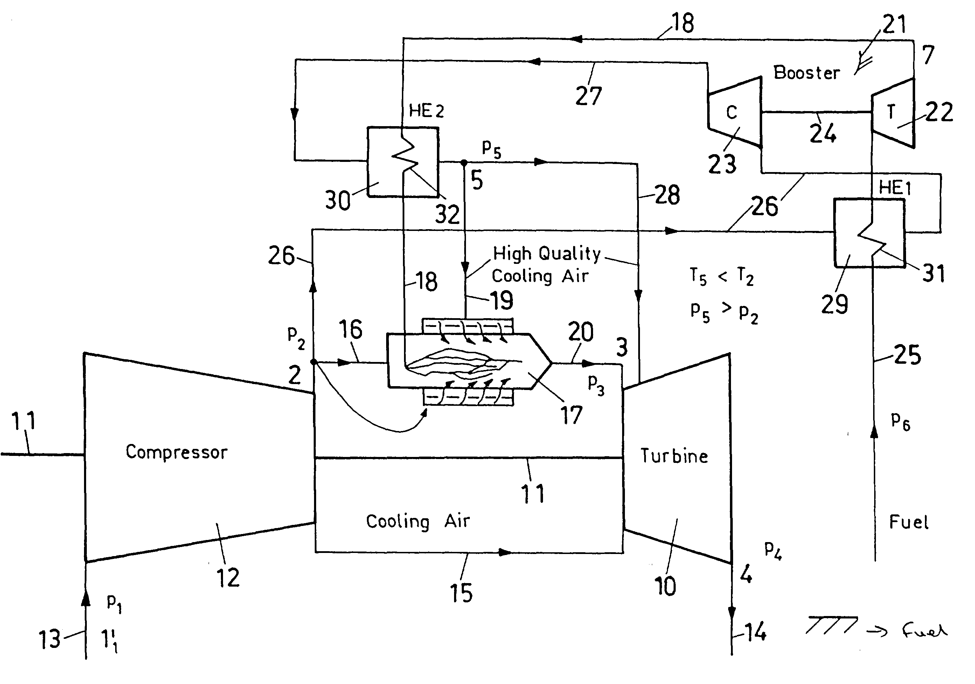

Ein Ausführungsbeispiel der erfindungsgemässen Gasturbine ist im folgenden anhand der beigefügten Zeichnung ausführlich beschrieben. Die einzige Figur dieser Zeichnung zeigt in schematischer Darstellung eine Gasturbinenanlage.

Diese Anlage weist eine Turbine 10 auf, welche über eine Welle 11 einen Kompressor 12 antreibt. Durch eine Leitung 13 wird dem Kompressor 12 Luft zugeführt. Aus der Turbine 10 treten die Abgase durch eine Leitung 14. Die im Kompressor 12 erzeugte Druckluft oder Kühlluft gelangt einerseits durch eine Leitung 15 direkt in die Turbine 10. Andererseits gelangt die im Kompressor 12 erzeugte Druckluft oder Kühlluft über eine Leitung 16 in eine Brennkammer 17. Diese Brennkammer 17 wird über Leitung 18 mit Brennstoff, z.B. Erdgas, versorgt. Ausserdem wird diese Brennkammer über eine Leitung 19 versorgt. Ueber eine Leitung 20 gelangen die in der Brennkammer 17 erzeugten Gase in die Turbine 10.

An dieser bisher beschriebenen Anlage wird nun ein Booster 21 hinzugefügt, der zur Erzeugung von Kühlluft höherer Qualität dient. Dieser Booster 21 weist eine Boosterturbine 22 und einen Boosterkompressor 23 auf. Der Boosterkompressor 23 wird über eine Welle 24 von der Boosterturbine 22 angetrieben. Der Boosterturbine 22 wird über eine Brennstoffleitung 25 Brennstoff, z.B. Erdgas, zugeführt.

Der aus der Boosterturbine über Leitung 18 austretende Brennstoff gelangt in die Brennkammer 17. Der obenerwähnte Kompressor 12 ist über eine weitere Leitung 26 mit dem Boosterkompressor 23 verbunden. Die im Boosterkompressor 23 erzeugte Kühlluft von höherer Qualität gelangt einerseits über Leitung 27 und 19 in die Brennkammer 17 und andererseits über Leitung 27 und 28 zur Turbine 10.

Zur Verbesserung des Wirkungsgrades der soeben beschriebenen Anlage sind noch zwei Wärmetauscher 29 und 30 vorhanden. Der erste Wärmetauscher 29 weist eine Kühlschlange 31 auf, welche an die Brennstoffleitung 25 angeschlossen ist. Mit diesem Wärmetauscher kann die in Leitung 26 fliessende Kühlluft abgekühlt werden. Der zweite Wärmetauscher 30 weist eine Kühlschlange 32 auf, welche an die Brennstoffleitung 18 angeschlossen ist. Mit diesem zweiten Wärmetauscher 30 kann die in Leitung 27 enthaltene Kühlluft abgekühlt werden. Der erste Wärmetauscher 29 ist über Kühlluftleitung 26 an den Kompressor 12 sowie an den Boosterkompressor 23 angeschlossen. Der zweite Wärmetauscher 30 ist über Kühlluftleitung 27 an den Boosterkompressor 23 sowie über Leitung 28 an die Turbine 10 angeschlossen.

Die Wirkungsweise der beschriebenen Einrichtung ist wie folgt:
Der von der Turbine 10 angetriebene Kompressor 12 komprimiert Luft vom Druck pl auf den Druck p2. Diese komprimierte Luft vom Druck p2 gelangt einerseits als Kühlluft über Leitung 15 in die Turbine und andererseits wird sie über Leitung 16 der Brennkammer 17 zugeführt und ermöglicht hier die Verbrennung des aus Leitung 18 zugeführten Brennstoffes. Diese komprimierte Druckluft p2 gelangt ferner über Leitung 26 zum ersten Wärmetauscher 29 des Boosters 21. In der Brennkammer wird ein Gas vom Druck p3 erzeugt, das über Leitung 20 in die Turbine 10 gelangt und diese antreibt. Die Turbine 10 kann somit über Welle 11 den Kompressor 12 antreiben.

Um den Wirkungsgrad der Turbine 10 und der Brennkammer 17 zu verbessern, wird einerseits über Leitung 28 Kühlluft von höherer Qualität der Turbine 10 zugeführt, als die über Leitung 15 vom Kompressor 12 zur Turbine 10 zugeführte Kühlluft und andererseits wird über Leitung 19 der Brennkammer 17 ebenfalls Kühlluft von höherer Qualität zugefügt. Diese Kühlluft von höherer Qualität wird vom Boosterkompressor 23 erzeugt. Der Druck dieser Kühlluft steigt dabei vom Wert p2 auf den p5. Gleichzeitig wird die Temperatur dieser Kühlluft vom Wert T2 auf den Wert T5 abgesenkt. Im ersten Wärmetauscher 29 wird der Brennstoff vor der Boosterturbine mit dem Druck p6 erwärmt. Im zweiten Wärmetauscher 30 wird der Brennstoff, der aus der Boosterturbine austritt, weiter erwärmt. Der Boosterkompressor 23 wird von der Boosterturbine 22 über die Welle 24 angetrieben. Der Brennstoff, z.B. Erdgas, wird zum Antreiben der Boosterturbine 22 verwendet.

### Bezugsziffernliste

- 10: Turbine
- 11: Welle
- 12: Kompressor
- 13: Leitung Kompressoreintritt
- 14: Leitung Turbinenaustritt
- 15: Leitung Kühlluftleitung zur Turbine
- 16: Leitung zur Brennkammer
- 17: Brennkammer
- 18: Brennstoffleitung
- 19: Kühlluftleitung
- 20: Turbinenspeiseleitung
- 21: Booster
- 22: Turbine Boosterturbine
- 23: Boosterkompressor
- 24: Welle Boosterwelle
- 25: Brennstoffleitung
- 26: Luftleitung
- 27: Luftleitung für Kühlluft höherer Qualität
- 28: Luftleitung für Kühlluft höherer Qualität
- 29: Wärmetauscher
- 30: Wärmetauscher
- 31: Kühlschlange
- 32: Kühlschlange

## Patentansprüche

1. Gasturbinenanlage zum Betrieb mit Erdgas, das über eine Druckleitung (25) zugeführt wird, mit durch Druckluft gekühlten Teilen, wobei im Kühlluftkreis (26,27) ein Kompressor (23) eines Boosters eingeschaltet ist, dessen in der Druckleitung (25) liegende Turbine vom Erdgas antreibbar ist, dadurch gekennzeichnet, dass im Kühlluftkreis (26, 27) und in der vom Erdgas durchströmten Druckleitung (25) Mittel (21, 29, 30) zum Komprimieren und Abkühlen der zum Kühlluftkreis gehörigen Druckluft eingeschaltet sind.

2. Gasturbinenanlage nach Anspruch 1, dadurch gekennzeichnet, dass im Kühlluftkreis (26, 27) als Mittel zum Abkühlen ein Wärmetauscher (29) eingeschaltet ist, dessen in der Druckleitung liegende Kühlschlange (31) vom Erdgas durchströmbar ist.

3. Gasturbinenanlage nach Anspruch 1, dadurch gekennzeichnet, dass die Mittel zur Abkühlung der Druckluft des Kühlluftkreises aus einem ersten (29) und einem zweiten (30) Wärmetauschern bestehen, dass sich der erste Wärmetauscher (29) im Kühlluftkreis vor dem Booster (21) befindet, und dass sich der zweite Wärmetauscher (30) im Kühlluftkreis hinter dem Booster (21) befindet.

4. Gasturbinenanlage nach Anspruch 1, dadurch gekennzeichnet, dass die mit Druckluft gekühlten Teile eine Turbine (10) und eine Brennkammer (17) sind.

## Claims

1. Gas turbine plant for operation by natural gas, which is fed via a pressure line (25), having parts cooled by compressed air, there being included in the cooling-air circuit (26, 27) a compressor (23) of a booster, the turbine of which, lying in the pressure line (25), can be driven by the natural gas, characterized in that there are included in the cooling-air circuit (26, 27) and in the pressure line (25) flowed through by the natural gas means (21, 29, 30) of compressing and cooling the compressed air belonging to the cooling-air circuit.

2. Gas turbine plant according to Claim 1, characterized in that there is included in the cooling-air circuit (26, 27), as means for the cooling, a heat exchanger (29), the cooling coil (31) of which, lying in the pressure line, (31) can be flowed through by the natural gas.

3. Gas turbine plant according to Claim 1, characterized in that the means for cooling the compressed air of the cooling-air circuit comprise a first heat exchanger (29) and a second heat exchanger (30), in that the first heat exchanger (29) is located in the cooling-air circuit ahead of the booster (21), and in that the second heat exchanger (30) is located in the cooling-air circuit after the booster (21).

4. Gas turbine plant according to Claim 1, characterized in that the parts cooled by compressed air are a turbine (10) and a combustion chamber (17).

## Revendications

1. Installation de turbine à gaz pour fonctionnement au gaz naturel qui est amené par une conduite sous pression (25), avec des parties refroidies à l'air comprimé, dans laquelle un compresseur (23) d'un booster, dont la turbine montée dans la conduite sous pression (25) peut être entraînée par le gaz naturel, est placé dans le circuit d'air de refroidissement (26, 27), caractérisée en ce que des moyens (21, 29, 30) pour comprimer et refroidir l'air comprimé faisant partie du circuit d'air de refroidissement sont placés dans le circuit d'air de refroidissement (26, 27) et dans la conduite sous pression (25) parcourue par le gaz naturel.

2. Installation de turbine à gaz suivant la revendication 1, caractérisée en ce qu'en guise de moyens de refroidissement dans le circuit d'air de refroidissement (26, 27) est placé un échangeur de chaleur (29), dont le serpentin de refroidissement (31) monté dans la conduite sous pression peut être parcouru par le gaz naturel.

3. Installation de turbine à gaz suivant la revendication 1, caractérisée en ce que les moyens de refroidissement de l'air comprimé du circuit d'air de refroidissement se composent d'un premier (29) et d'un second (30) échangeurs de chaleur, en ce que le premier échangeur de chaleur (29) se trouve avant le booster (21) dans le circuit d'air de refroidissement, et en ce que le second échangeur de chaleur (30) se trouve après le booster (21) dans le circuit d'air de refroidissement.

4. Installation de turbine à gaz suivant la revendication 1, caractérisée en ce que les parties refroidies à l'air comprimé sont une turbine (10) et une chambre de combustion (17).
